# EUROPEAN PATENT APPLICATION

(11) **EP 1 598 163 A1**
(43) Date of publication of application: **23.11.2005**
(21) Application number: 04713253.5
(22) Date of filing: 20.02.2004
(51) Int. Cl.: B28D 5/00, C03B 33/03, B23Q 3/08

(54) **SUBSTRATE-PROCESSING TABLE AND SUBSTRATE PROCESSING DEVICE**

(30) Priority: 21.02.2003 JP 2003044077
(71) Applicant: Mitsuboshi Diamond Industrial Co., Ltd., Suita-city, Osaka Pref. 564-0044 (JP)
(72) Inventor: SOYAMA, Masanobu, Mitsuboshi Diamond Ind. Co., Ltd, Suita-city, Osaka 564-0044 (JP)
(74) Representative: Tiedtke, Harro
(86) International application number: PCT/JP2004/002036
(87) International publication number: WO 2004/073946

(57) **Abstract**

A substrate processing table is constituted, in layer form, of a first sub-table, a second sub-table, a rubber plate and a metal plate. A plurality of substrate adsorbing holes are provided which penetrate through the sub-tables, the rubber plate and the metal plate to suck the substrate. Further, a plurality of hard-sheet adsorbing holes are provided which penetrate through the second sub-table and the rubber plate to suck the metal plate. At the time of fixing the substrate, air is discharged via a cavity portion formed on the lower side of the second sub-table, and the pressure of each of the adsorbing holes is made negative. With such a configuration, it is possible to improve a method for holding a substrate so as to improve a scribe function in a scribe step and a break function in a break step at the time of dividing the substrate.

## Description

### Technical Field

The present invention relates to a substrate processing table to break a substrate along a scribe line formed thereon, along the scribe line, and a substrate processing device in which the substrate processing table is used.

### Background Art

There exist, as substrates, brittle substrates such as a semiconductor wafer, a glass substrate, a quartz substrate and a ceramic substrate. There also exists, as a substrate other than the above substrates, a laminated substrate formed by laminating two substrates. This substrate has often been used particularly for a panel for a liquid crystal display (LCD) as a kind of a flat panel display (FPD). Further, the laminated substrate has also been used for a plasma display panel (PDP) as another FPD, a transparent liquid crystal projector substrate and a reflective liquid crystal projector substrate which are included in a liquid crystal projector, an organic EL element, and the like. The laminated substrates to be used in such applications come in various sizes from a small sized substrate like a panel for a liquid display to be used for a mobile phone to a large sized substrate for a television or display. A large sized mother substrate is divided into substrates having a predetermined size, which are used to produce individual FPDs. In producing the FPDs, a yield in the step of dividing the laminated substrate is reflected to production cost for the FPDs.

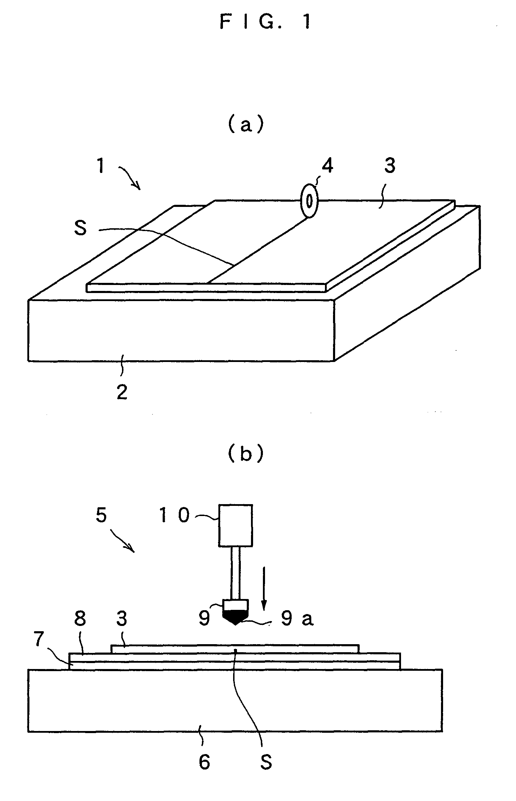

Description will be given taking a single-plate glass substrate and a laminated glass substrate as examples of the substrate in the present invention. First, taking the case where a substrate is a single-plate glass substrate as one example, a method for dividing this substrate will be described by use of Fig. 1. As a conventional method for dividing a single-plate glass substrate, a scribing device shown in Fig. 1(a) and a breaking device shown in Fig. 1(b) are used, for example, as disclosed in a patent document (Japanese Unexamined Patent Publication No. 2002-103295).

First, in a scribing device 1, a glass substrate 3 as an object to be processed is placed on a scribing table 2. Then, a cutter wheel 4 having an obtuse distal end is press-contacted onto the glass substrate 3 with predetermined pressure. Subsequently, with the predetermined pressure kept applied, the cutter wheel 4 is rolled, so that a scribe line S is formed on the surface of the glass substrate 3.

Next, as shown in Fig. 1(b), the obverse and reverse of the glass substrate 3 are inverted. The glass substrate 3 is then set on a table 6 of the breaking device 5 via a rubber plate 7 serving as a cushion and a metal plate 8 such as a stainless plate.

A breaking bar 9 has a structure of attaching a pressure application portion 9a to a distal end of a stick-like member made of steel. The pressure application portion 9a is obtained by, for example, forming hard urethane rubber into wedge form. The breaking bar 9 is provided by means of a vertical movement mechanism which is not shown in the figure so as to be movable in a vertical direction. The vertical movement mechanism vertically moves by electrical driving means using a motor or mechanical driving means using a cam or the like. Further, a moving velocity of the breaking bar 9 when moving is freely changeable and adjustable by means of a velocity variable mechanism. In the case of a vertical movement mechanism by means of a cylinder using compressed air, the downward and upward movement of the breaking bar 9 is performed by supply/discharge of the compressed air to/from a cylinder 10. The movements including the pressure application operation using the compressed air are controlled by a solenoid valve. Setting of pressure force for pressing a glass substrate by the breaking bar 9 is performed by supplying, into the cylinder 10, compressed air suited for the breaking conditions as appropriate, in accordance with the thickness, the material and the like of the glass substrate 3. It should be noted that the thickness of the rubber plate 7 is from 2 to 4 mm, and the thickness of the metal plate 8 is from 0.7 to 6 mm.

The glass substrate 3 is positioned such that the stick-like breaking bar 9 is located along the scribe line S on the under surface of the glass substrate 3. The breaking bar 9 is moved downward by the drive of the cylinder 10 to press the glass substrate 3 from above. In this manner, the glass substrate 3 is slightly distorted by the breaking bar 9 into V-shape on the elastic rubber plate 7, and a bending moment is applied along the scribe line S. Subsequently, a crack (vertical crack) which is a vertical constituent of the scribe line S to contribute to the breaking of the glass substrate 3 is extended, and the glass substrate 3 is broken along the scribe line S.

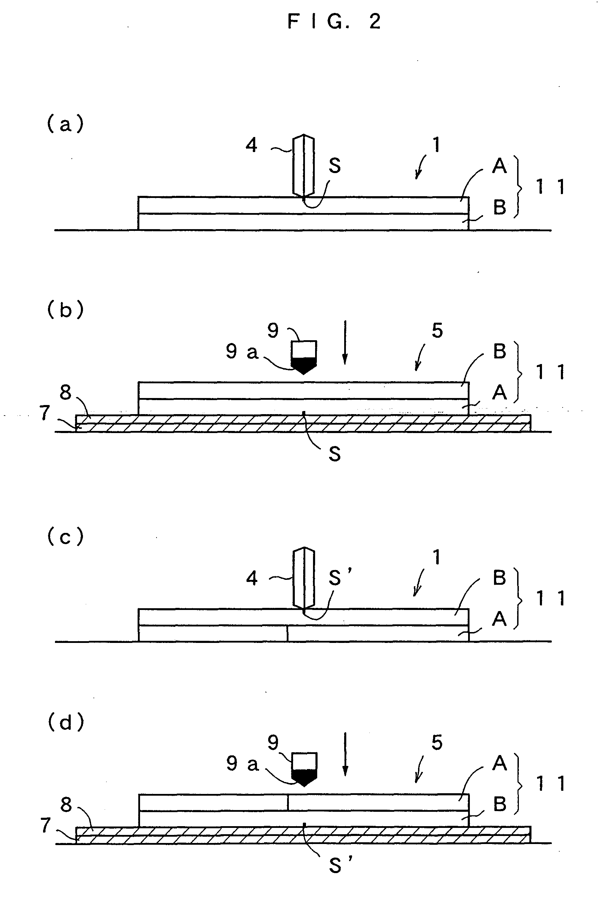

Next, the steps of the dividing method, in the case of breaking a laminated glass such as a mother substrate to be used for a panel for a liquid crystal display, will be described by use of Fig. 2.
1. First, in the scribing device 1 in Fig. 2(a), a scribe line S is formed with the use of the cutter wheel 4 on the upper side glass substrate A of a laminated glass substrate 11 made by laminating two glass substrates A and B.
2. Next, in Fig. 2(b), using the breaking device 5, the breaking bar 9 is pressed onto the glass substrate B along the scribe line S formed on the glass substrate A of the laminated glass substrate 11, the obverse and reverse of which have been inverted. The lower side glass substrate A is then broken along the scribe line S.
3. Subsequently, as in Fig. 2(c), the laminated glass substrate 11 is placed back on the scribing device 1 used in the step of Fig. 2(a), and a scribe line S' is formed on the glass substrate B. It should be noted that, as for the panel for a liquid crystal display, the respective scribe lines on the two glass substrates A and B are displaced from each other since a terminal is formed on one end of the glass substrate.
4. Thereafter, as shown in Fig. 2(d), the laminated glass substrate 11, the obverse and reverse of which have been inverted again, is placed back on the breaking device 5 used in the step of Fig. 2(b). The breaking bar 9 is pressed onto the glass substrate A along the scribe line S' formed on the glass substrate B, and the lower side glass substrate B is then broken along the scribe line S'.

In the foregoing description, the example is shown in which the scribing device used in the scribe steps, where the respective scribe lines are formed on the glass substrate A and the glass substrate B, and the breaking device used in the break steps, and where the glass substrate A and the glass substrate B are broken along the respective scribe lines is the same device. However, either the scribing device or the breaking device used in the scribe/break steps may be a different one.

In order to fix the glass substrate 3 or the laminated glass substrate 11 as described above onto the scribing table of the scribing device and the table of the breaking device, a table based upon a so-called vacuum chuck system is used. Herein, a table for breaking is referred to as a processing table.

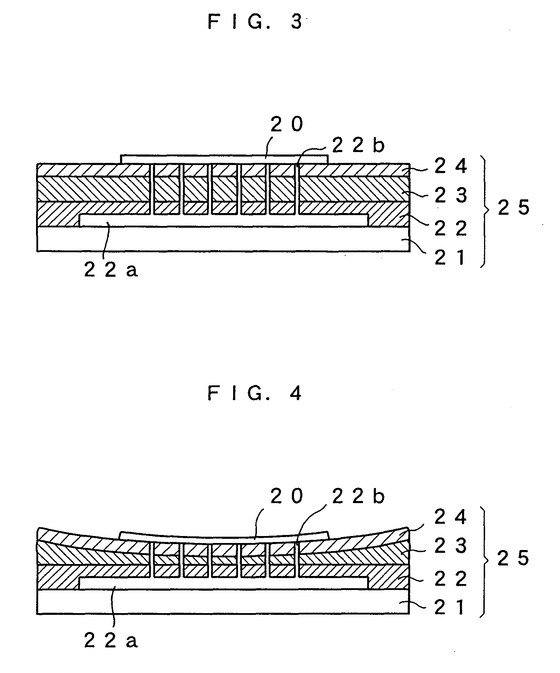

Fig. 3 is a cross sectional view showing a basic configuration of a conventional processing table based upon the vacuum chuck system. In the following description, the following substrates are each called a substrate 20: transparent projector substrates as brittle substrates such as a single-plate semiconductor wafer, a ceramic substrate and a glass substrate, and a laminated substrate; a reflective projector substrate; a PDP as an FPD; a panel for a liquid crystal display; an organic EL device substrate; and the like. For fixing such a substrate 20 onto a table of a breaking device, a first sub-table 21, a second sub-table 22, a rubber plate 23 and a metal plate 24 are sequentially provided in this order, and the substrate 20 is placed on the top surface of the metal plate 24. Herein, the combination of the first sub-table 21, the second sub-table 22, the rubber plate 23 and the metal plate 24 is called a processing table 25.

The first sub-table 21 is a base material freely attachable to/detachable from a working table which is not shown in the figure of a breaking device. The second sub-table 22 is a table of the identical plane shape to that of the first sub-table 21. The second sub-table 22 is provided with a portion with a reduced thickness, which is a substrate adsorbing cavity portion 22a and a large number of substrate adsorbing holes 22b are formed from the substrate adsorbing cavity portion 22a toward the top surface of the second sub-table 22. Assuming that the plane shape of the second sub-table 22 is rectangle or square, the substrate adsorbing holes 22b are formed in a vertical direction at a grid position in the second sub-table 22. Further, each of the rubber plate 23 and the metal plate 24 is also provided with the substrate adsorbing holes 22b at the same grid position as the position on the second sub-table 22, in the state of penetrating to the outside of the metal plate 24. Such substrate adsorbing holes 22b are formed in the placement range of the substrate 20. The substrate adsorbing cavity portion 22a is connected to a discharge pump which is not shown in the figure to discharge air from the substrate adsorbing cavity portion 22a and the substrate adsorbing holes 22b, so that the substrate 20 can be fixed by sucking onto the processing table 25.

When a substrate 20 of a large shape is placed on the processing table 25 for suction/adsorption by use of the above-mentioned vacuum chuck, as shown in Fig. 4, the substrate 20 is sucked toward the second sub-table 22 and the first sub-table 21. At this time, force is applied which presses down a portion performing the suction/adsorption on the substrate 20, and the force is transmitted to the metal plate 24 and the rubber plate 23 which are lower layers than the substrate 20. Since this pressing force functions only in a portion where the substrate 20 exists, the metal plate 24 and the rubber plate 23 are distorted as shown in Fig. 4. As a result, the substrate 20 is firmly bowed in central part, and as a whole comes into a warped state. When the substrate 20 in such a state is broken, unnecessary stress acts inside the substrate 20, which might incur break failure. Moreover, there has been a tendency of the substrate 20 to have an increasingly large size, and in the case where the substrate 20 has a larger size, an amount of a dent in the central portion may further increase to cause the stress within the substrate 20 to exceed the allowable range thereof, which might further incur break failure.

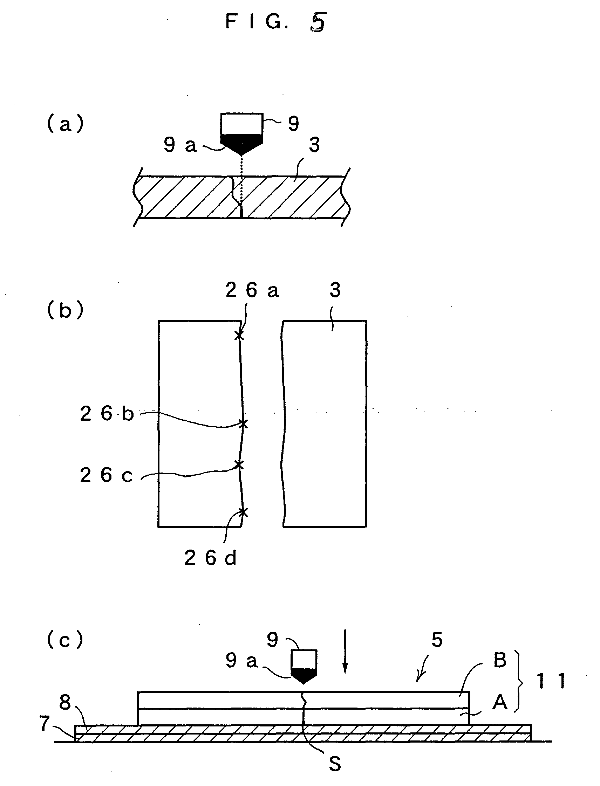

Fig. 5 illustrate various problems (break failure) which occur when a substrate is broken using a conventional breaking device. The following description will be made taking the glass substrate 3 and the laminated glass substrate 11 as examples of the substrate. The conventional breaking device and the breaking method have had problems as described bellow. In Fig. 1(b), the glass substrate 3 is not a perfect plane but has a certain degree of swell on the surface thereof, and is also curved slightly when adsorbed to a processing table. Moreover, since the breaking bar 9 itself has a warp or swell, stress may unnecessarily be applied to the glass substrate 3, or the breaking bar 9 may not be able to vertically and uniformly press the glass substrate 3 to prevent the pressing force of the breaking bar 9 from being vertically and uniformly transmitted to the glass substrate, which might lead to oblique breaking of the glass substrate 3 as shown in Fig. 5(a). Furthermore, since the breaking bar 9 and the glass substrate 3 do not uniformly come into contact with each other, and pressure is not uniformly applied to the breaking bar 9 and the glass substrate 3, a vertical crack extends along a scribe line with a plurality of points 26a, 26b, 26c ... on the glass substrate 3 as starting points, as shown in the plan view of Fig. 5(b). Thereby, on the cross section of the broken glass substrate, a swell occurs like a broken line connecting the above-mentioned starting points. Further, since there occurs a place where part of the substrate is strongly pressed by the breaking bar 9, in the case of the laminated glass substrate 11 as shown in Fig. 5(c), a so-called co-broken phenomenon might occur in which, when one glass substrate (glass substrates A) is broken, the other substrate (glass substrate B) where no scribe line is formed is also broken.

It is an object of the present invention to provide a substrate processing table capable of resolving break failure including oblique breaking of a substrate, breaking of a substrate with a plurality of points acted as starting points, and occurrence of the co-broken phenomenon when breaking a laminated substrate, and also to provide a substrate processing device.

### Disclosure of Invention

A substrate processing table of the present invention comprises a first sub-table, a second sub-table which is placed on a top surface of the first sub-table, an elastic sheet which has a predetermined thickness and is provided on a top surface of the second sub-table, and a hard sheet which is provided on a top surface of the elastic sheet and on which a substrate to be processed is placed. Particularly, the substrate processing table comprises a plurality of substrate adsorbing holes which penetrate through the second sub-table, the elastic sheet and the hard sheet, to suck the substrate. The substrate processing table also comprises a plurality of hard-sheet adsorbing holes which penetrate through the second sub-table and the elastic sheet, to suck the hard sheet. The substrate processing table also comprises a communication portion for communicating the lower ends of the substrate adsorbing holes and the hard-sheet adsorbing holes to a vacuum source.

Herein, the communication portion may be formed on either the first sub-table or the second sub-table, and may include a cavity portion which communicates each of the lower ends of the plurality of substrate sucking holes and the plurality of hard-sheet sucking holes with the vacuum source.

Herein, formation ranges of the substrate adsorbing holes and the hard-sheet adsorbing holes may be changed according to the shape of the substrate.

Herein, the respective upper ends of the substrate adsorbing holes and the hard-sheet adsorbing holes may be arranged in line in at least one concentric position.

Herein, the respective upper ends of the substrate adsorbing holes and the hard-sheet adsorbing holes may be alternately arranged in at least one concentric position.

Herein, the cavity portion may include a substrate sucking cavity portion which communicates a substrate adsorbing hole group arranged in a concentric position to the vacuum source, and a hard-sheet sucking cavity portion which communicates the hard-sheet adsorbing hole group arranged in a concentric position to the vacuum source. Further, the substrate sucking cavity portion and the hard-sheet sucking cavity portion may be grooves formed on either the first sub-table or the second sub-table.

Herein, the substrate adsorbing holes and the hard-sheet adsorbing holes may be collectively formed so as to be parted with a plurality of regions, and the regions may be formed in a pattern having regularity. Further, the pattern formed in this region may be checkered pattern.

Herein, a switching valve may be provided on each communication portion extending from the substrate adsorbing hole and the hard-sheet adsorbing hole to the vacuum source.

Herein, the substrate sucking holes and the hard-sheet sucking holes may be arranged in a pattern having regularity.

Herein, the substrate sucking holes and the hard-sheet sucking holes may be formed in grid form, and each of the sucking holes may be arranged on a line connecting points of the grid.

A substrate processing device of the present invention comprises, in addition to the above-mentioned substrate processing table, a discharge device which keeps at negative pressure specific adsorbing holes among a plurality of substrate adsorbing holes and hard-sheet adsorbing holes provided in the substrate processing table, and break means which is held in a vertically movable manner with respect to the substrate processing table to break a substrate on which a subscribe line is formed.

A substrate processing device of the present invention comprises, in addition to the above-mentioned substrate processing table, a discharge device which keeps at negative pressure specific adsorbing holes among a plurality of substrate adsorbing holes and hard-sheet adsorbing holes provided in the substrate processing table, scribe means which forms a scribe line on a substrate held on the substrate processing table, and break means which breaks the substrate along the scribe line.

### Brief Description of Drawings

Fig. 1(a) is a conceptual view showing a basic structure of a conventional scribing device for a glass substrate.
Fig. 1(b) is a conceptual view showing a basic structure of a breaking device.
Fig. 2 is a step diagram showing conventional scribe steps and break steps for dividing of a laminated substrate.
Fig. 3 is a cross sectional view showing a basic structure of a conventional processing table.
Fig. 4 is a cross sectional view showing a state where the conventional processing table sucks the substrate.
Fig. 5 is an explanatory view showing various problems of the breaking state in the conventional breaking device.
Fig. 6 is a cross sectional view showing a basic structure of a processing table in Embodiment 1 (part 1) of the present invention.
Fig. 7 is a cross sectional view showing a basic structure of a processing table in Embodiment 1 (part 2) of the present invention.
Fig. 8 is a back side plan view showing a structure of a main part of a processing table in Embodiment 2 of the present invention.
Fig. 9 is a cross sectional view showing a structure of the main part of the processing table in Embodiment 2.
Fig. 10 is a plan view showing a structure of a main part of a processing table in Embodiment 3 (part 1) of the present invention.
Fig. 11 is a cross sectional view showing the structure of the main part of the processing table in Embodiment 3 (part 1).
Fig. 12 is a cross sectional view showing a structure of a main part of a processing table in Embodiment 3 (part 2).
Fig. 13 is a plan view showing a structure of a main part of a processing table in Embodiment 4 of the present invention.
Fig. 14 is a cross sectional view showing the structure of the main part of the processing table in Embodiment 4.
Fig. 15 is an external perspective view showing a structure of a main part of a substrate processing device in Embodiment 5 of the present invention.
Fig. 16 is a partial enlarged perspective view showing a structure of a stopper mechanism in a breaking device of Embodiment 5.
Fig. 17 is an external perspective view showing a structure of a main part of a substrate processing device in Embodiment 6 of the present invention.

### Best Mode for Carrying Out the Invention

### (Embodiment 1)

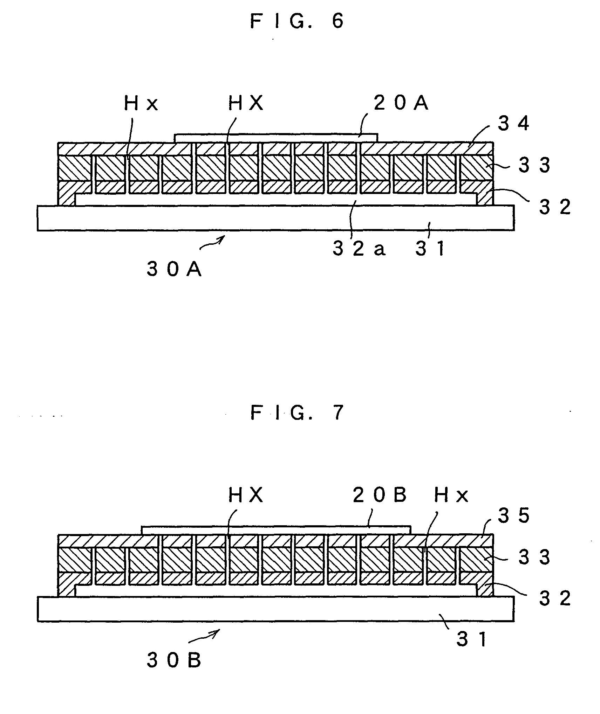

A substrate processing table in Embodiment 1 of the present invention will be described by use of Figs. 6 and 7. Fig. 6 is a schematic view showing a sectional structure of a processing table in this embodiment. This processing table 30A includes a first sub-table 31, a second sub-table 32, a rubber plate 33 and a metal plate 34.

The first sub-table 31 is to be fixed onto a working table of a later-described substrate processing device, and is freely attachable to/detachable from the working table. A cavity portion 32a having a thickness reduced from the thickness of the second sub-table 32 is provided in the central portion of the bottom face of the second sub-table 32, and a large number of substrate adsorbing holes HX and hard-sheet adsorbing holes Hx are formed from the cavity portion 32a toward the top surface.

The substrate adsorbing holes HX serve to adsorb a substrate 20A. These holes HX are located across the placement range of the substrate 20A, in a grid position on each of the second sub-table 32, the rubber plate 33 and the metal plate 34, and penetrate through those in the vertical direction. The hard-sheet adsorbing holes Hx serve to adsorb the metal plate 34. These holes Hx are provided out of the placement range of the substrate 20A, in the grid position on each of the second sub-table 32 and the rubber plate 33, and penetrate through those in the vertical direction. The cavity portion 32a is connected to a discharge device including a discharge pump which is not shown in the figure via a piping member. It is to be noted that the cavity portion 32a may be provided on the upper side of the first sub-table 31, instead of being provided in the second sub-table 32.

The rubber plate 33 is an elastic sheet for resiliently absorbing deformation of the substrate 20A that occurs when the substrate is broken. The metal plate 34 is constituted, for example, of a stainless (SUS) plate, or an aluminum plate, and the substrate 20A is directly placed on the metal plate 34.

Fig. 7 is a sectional structural view of a processing table 30B to be used upon dividing a substrate 20B of a larger shape than that of the substrate 20A of Fig. 6. This processing table 30B also includes the first sub-table 31, the second sub-table 32, the rubber plate 33 and the metal plate 35. Here, the installation range of the substrate adsorbing hole HX is changed in accordance with the shape of the substrate 20B. The processing table shown in Fig. 7 can be realized only by replacement of the metal plate 34 shown in Fig. 6 with a metal plate 35 where the substrate adsorbing holes HX are formed across a broader range.

The substrate 20A or 20B is placed on the processing table 30A or 30B having the above-described structure, and a discharge device is activated to make pressure negative in the insides of the substrate adsorbing holes HX and the hard-sheet adsorbing holes Hx, so as to perform suction/adsorption. In this manner, the substrate 20A or 20B is sucked toward the metal plate 34 or 35, and suction force also is applied to the metal plate 34 or 35 as a whole. Therefore, the substrate 20A or 20B and the metal plate 34 or 35 are not downwardly warped, but firmly fixed onto the processing table 30A or 30B. It is thereby possible to significantly reduce warping of the substrate 20A or 20B so as to suppress break failure.

### (Embodiment 2)

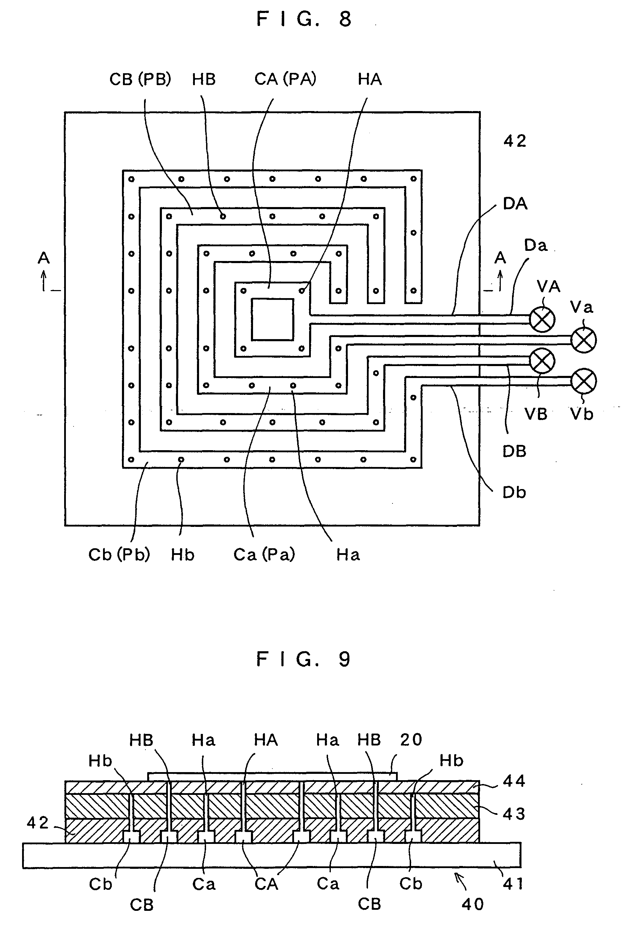

Next, a substrate processing table in Embodiment 2 of the present invention will be described by use of Figs. 8 and 9. Fig. 8 shows a back side plan view showing a structure of a main part, namely, a second sub-table of the processing table in Embodiment 2. Fig. 9 is a cross sectional view showing a structure of a main part of a processing table 40, taken along a line A-A of Fig. 8. This processing table 40 includes a first sub-table 41, a second sub-table 42, a rubber plate 43, and a metal plate 44. It should be noted that, since Fig. 8 is a plan view seen from the back side of the second sub-table 42, a plurality of adsorbing holes formed in concentric positions, substrate adsorbing grooves and hard-sheet adsorbing grooves, which are communicated with those adsorbing holes, and discharge grooves for discharging air out of these grooves are shown in the figure. Since the first sub-table 41 and the rubber plate 43 are the same as the first sub-table 33 and the rubber plate 34 in Embodiment 1, descriptions thereof are omitted.

On the under surface of the second sub-table 42, a plurality of square-shaped or C-shaped grooves are provided in concentric positions as shown in Fig. 8. In the order from the central portion toward the outer perimeter portion, the grooves provided are referred to as a substrate adsorbing groove CA, a hard-sheet adsorbing groove Ca, a substrate adsorbing groove CB, a hard-sheet adsorbing groove Cb ... The substrate adsorbing grooves CA, CB ... are substrate adsorbing grooves provided for adsorbing the substrate 20. The hard-sheet adsorbing grooves Ca, Cb ... are hard-sheet adsorbing grooves provided for adsorbing the metal plate 44. Further, substrate adsorbing holes HA, HB ... for adsorbing the substrate 20 are provided in the concentric positions PA, PB ..., which are identical to the concentric positions of the substrate adsorbing grooves CA, CB ... Further, hard-sheet adsorbing holes Ha, Hb ... for adsorbing the metal plate 44 are provided in the concentric positions Pa, Pb ..., which are identical to the concentric positions of the hard-sheet adsorbing grooves Ca, Cb ...

Next, in order to discharge air from the substrate adsorbing grooves CA, CB ... to the outside, substrate adsorbing discharge grooves DA, DB ... are provided on the under surface of the second sub-table 42. Further, in order to discharge air from the hard-sheet adsorbing grooves Ca, Cb ... to the outside, hard-sheet adsorbing discharge grooves Da, Db ... are provided on the under surface of the second sub-table 42. If the material for the second sub-table 42 is, for example, a metal such as SUS, these discharge grooves are cut by machining to have a small thickness or processed by half-etching. It is to be noted that the substrate adsorbing discharge grooves and the hard-sheet adsorbing discharge grooves may be provided on the upper side of the first sub-table 41 in place of being provided on the second sub-table 42.

A switching valve is provided between each of the discharge grooves of the processing table 40 and a discharge pump which is not shown in the figure. Substrate adsorbing discharge valves are indicated by VA, VB ... with respect to the substrate adsorbing grooves CA, CB ... Further, hard-sheet adsorbing discharge valves are indicated by Va, Vb ... with respect to the hard-sheet adsorbing grooves Ca, Cb ... These discharge valves V are controlled to open or close in accordance with the shape of the substrate 20. In an example shown in Fig. 9, the substrate 20 is a square of a size smaller than the region of the hard-sheet adsorbing groove Cb. In this case, the substrate adsorbing discharge valves VA and VB are set to open, while the substrate adsorbing discharge valves VC ... (not shown) other than the substrate adsorbing discharge valves VA and VB are set to close. Further, the hard-sheet adsorbing discharge valves Va, Vb ... are set to open. The discharge valve V may be a manually controlled valve or a solenoid valve capable of selecting a valve to open or close by remote control in accordance with the shape of the substrate 20. Moreover, it is possible to realize a half-fixed valve function by inserting a male screw into a screw hole (female screw) which is provided so as to penetrate through the substrate adsorbing discharge grooves DA, DB ... and the hard-sheet adsorbing discharge grooves Da, Db ... provided between the respective adsorbing grooves and the discharge pump.

According to the processing table 40 having such a configuration, for example, when the shape of the substrate 20 is almost square, the discharge valve V is selectively set to open or close in accordance with the size of the substrate 20, so that the substrate 20 of any size as a whole can be adsorbed. Further, the metal plate 44 is also sucked via the hard-sheet adsorbing holes Ha and Hb, and can thus be made flat without warping. This can significantly reduce the warping of the substrate 20, thereby suppressing the break failure. Moreover, although the case of the substrate 20 in square shape has been described, a change in shapes of the substrate adsorbing grooves and the hard-sheet adsorbing grooves to be provided on the second sub-table 42 or the first sub-table 41 enables adsorption/fixing of substrates of various shapes without exerting stress due to inward bowing of the substrates.

In the case of continuously producing substrates of the same shape, the shape of the substrate 20 to be placed on the processing table and the position for fixing the substrate 20 are previously determined. In such a case, the open or close state of each of the discharge valves V remains unchanged unless the substrate model is changed. In this case, a screw valve is applicable as the discharge valve V.

### (Embodiment 3)

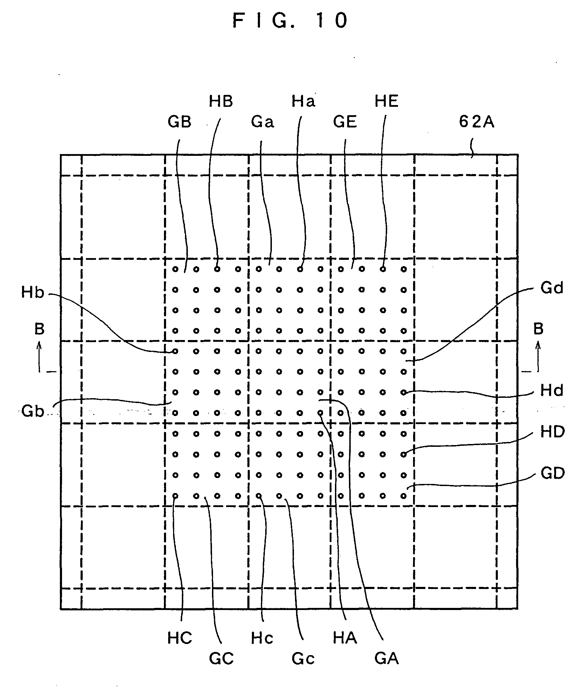

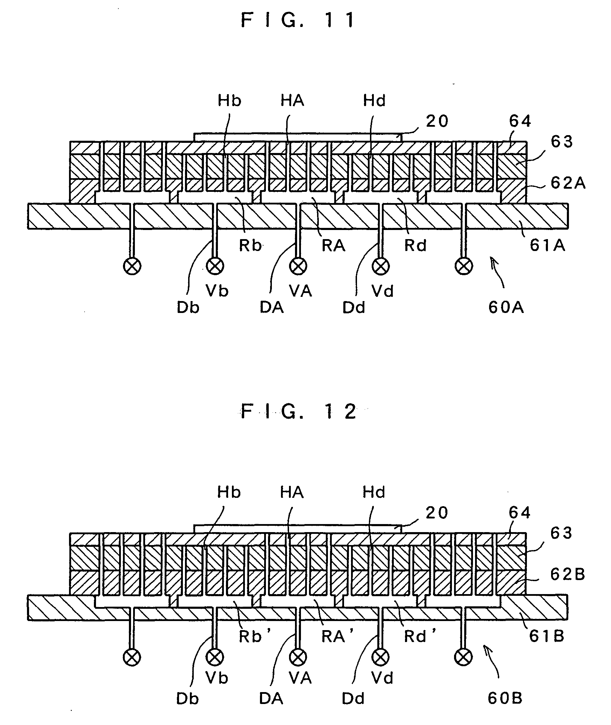

Next, a substrate processing table in Embodiment 3 of the present invention will be described by use of Figs. 10 and 11. Fig. 10 is a plan view of a structure of a main part, namely, a second sub-table 62A of a processing table 60A in Embodiment 3. Fig. 11 is a cross sectional view showing the structure of the processing table 60A, taken along a line B-B of Fig. 10. This processing table 60A includes a first sub-table 61A, the second sub-table 62A, a rubber plate 63, and a metal plate 64. It is to be noted that Fig. 10 shows the plan view seen from the top surface of the second sub-table 62A.

In this embodiment, the adsorbing holes in the second sub-table 62A are grouped into matrix form. When a region in the central position is indicated by GA, eight regions surrounding the substrate adsorption region GA are indicated by, counter-clockwise, GB, Gb, GC, Gc, GD, Gd, GE and Ga. The substrate adsorption regions GA, GB, GC, GD and GE are regions where a plurality of substrate adsorbing holes are formed for adsorbing the substrate 20. The hard-sheet adsorption regions Ga, Gb, Gc and Gd are regions where a plurality of hard-sheet adsorbing holes are formed for adsorbing the metal plate 64. There also exist similarly grouped adsorbing holes outside the above-mentioned regions. Distributing the adsorbing hole groups in a checkered pattern is the feature of this embodiment.

A substrate adsorbing hole in the substrate adsorption region GA is indicated by HA, a substrate adsorbing hole in the substrate adsorption region GB is indicated by HB, a substrate adsorbing hole in the substrate adsorption region GC is indicated by HC, a substrate adsorbing hole in the substrate adsorption region GD is indicated by HD, and a substrate adsorbing hole in the substrate adsorption region GE is indicated by HE. As shown in Fig. 11, these substrate adsorbing holes penetrate through the metal plate 64, the rubber plate 63 and the upper side of the second sub-table 62A. Air is discharged from the above-mentioned substrate adsorbing holes in accordance with the shape of the substrate 20, and those substrate adsorbing holes are kept at negative pressure (the substrate adsorbing holes HB, HC and HD are not shown in the figure).

Next, a hard-sheet adsorbing hole in the hard-sheet adsorption region Ga is indicated by Ha, a hard-sheet adsorbing hole in the hard-sheet adsorption region Gb is indicated by Hb, a hard-sheet adsorbing hole in the hard-sheet adsorption region Gc is indicated by Hc, and a hard-sheet adsorbing hole in the hard-sheet adsorption region Gd is indicated by Hd. As shown in Fig. 11, these hard-sheet adsorbing holes penetrate through the rubber plate 63 and the upper side of the second sub-table 62A. Air is discharged from the above-mentioned hard-sheet adsorbing holes in accordance with the shape of the substrate 20, and those hard-sheet adsorbing holes are kept at negative pressure (the hard-sheet adsorbing holes Ha and Hc are not shown in the figure). In the example shown in Fig. 10, each of the adsorbing hole groups is formed of 16 = 4 × 4 adsorbing holes in a grid position.

In the second sub-table 62A, the adsorbing holes in each of the adsorbing hole groups are connected to a common cavity portion. In Fig. 11, a substrate adsorbing cavity portion of a substrate adsorbing hole HA is indicated by RA, a hard-sheet adsorbing cavity portion of the hard-sheet adsorbing hole Hb is indicated by Rb, and a hard-sheet adsorbing cavity portion of the hard-sheet adsorbing hole Hd is indicated by Rd. The cavity portions Rb, RA and Rd penetrate through the first sub-table 61A and are connected to a discharge pump which is not shown in the figure via discharge through holes DA, Db and Dd respectively led to the cavity portions Rb, RA and Rd, and discharge valves Vb, VA and Vd respectively attached to the discharge through holes DA, Db and Dd. In the example shown in Fig. 11, the substrate 20 is a square of such a degree of size as to be placed across the regions of GB, Gb, GC, Gc, GD, Gd, GE and Ga. In this case, at the time of adsorbing the substrate 20, in the range shown in Fig. 11, the discharge valves Vb, VA and Vd are set to open while the other discharge valves are set to close, and the discharge pump is activated to keep the insides of the cavity portions Rb, RA and Rd at negative pressure.

It should be noted that Fig. 12 is a cross sectional view showing a structure of a processing table 60B which is a modification example of the processing table 60A. This processing table 60B includes a first sub-table 61B, a second sub-table 62B, the rubber plate 63 and the metal plate 64. In this processing table 60B, the adsorbing holes in the second sub-table 62B are made straight through the thickness of the second sub-table 62B, and a cavity portion is provided on the upper side of the first sub-table 61B. In the range shown in Fig. 12, a substrate adsorbing cavity portion of the substrate adsorbing hole HA is indicated by RA', a hard-sheet adsorbing cavity portion of the hard-sheet adsorbing hole Hb is indicated by Rb', and a hard-sheet adsorbing cavity portion of the hard-sheet adsorbing hole Hd is indicated by Rd'. Further, in addition to these, a cavity portion may be formed in each of the first and second sub-tables.

According to the configuration as described above, the shape of the substrate 20 is not restricted to square, but, for example, in the case of the rectangle shape, the pressure is made negative inside the adsorbing hole group in a region within the outline of the substrate 20, and discharge valve related to adsorbing holes in a region outside the outline is set to close. In this case, the effect of allowing effective adsorption/fixing of the substrate 20 in rectangular or landscape shape can be obtained. Since the discharge valve can be open or closed for each adsorbing hole group in the above-mentioned manner, even when the shape and size of the substrate 20 change, corresponding to its changes, adsorption of the substrate 20 to be allowed. Further, since each of the adsorption regions is provided with the discharge valve, the open/close level of the discharge valve can be adjusted to change the adsorption pressure to the substrate 20 and the metal plate 64 in each of the adsorption regions, so as to maintain the flat level of the substrate 20. Moreover, since each of the adsorption regions is provided with the discharge valve, it is possible to cancel the adsorption of the broken substrate by closure of the discharge valve in the region to adsorb the substrate after completion of breaking, consequently, carrying the substrate after completion of breaking to the outside of the dividing device as needed is also possible.

### (Embodiment 4)

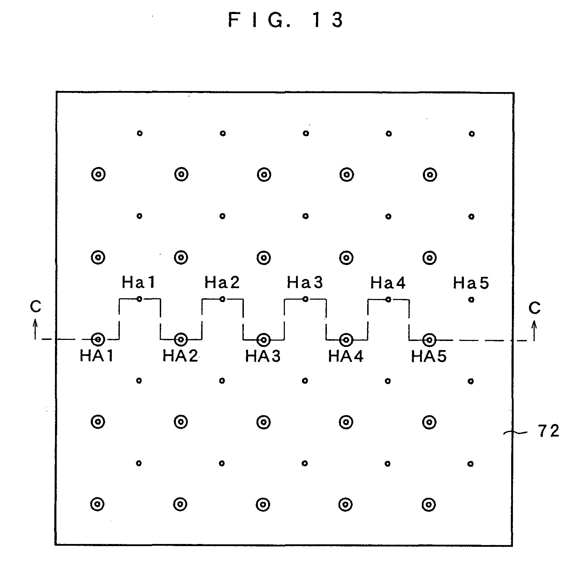

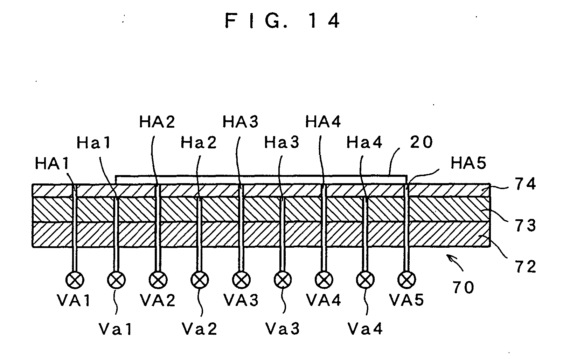

Next, a substrate processing table in Embodiment 4 of the present invention will be described by use of Figs. 13 and 14. Fig. 13 is a plan view of a structure of a main part, namely, a sub-table 72 of a processing table 70 in Embodiment 4. Fig. 14 is a cross sectional view of the processing table 70, taken along a zigzag line C-C of Fig. 13. This processing table 70 includes the sub-table 72, a rubber plate 73, and a metal plate 74.

In this embodiment, individual adsorbing holes are arranged in checkered form. Substrate adsorbing holes to adsorb the substrate 20 are indicated by HA1, HA2, HA3, HA4, HA5 ..., and arranged in grid form (first grid position) as indicated by double circles in Fig. 13. Meanwhile, hard-sheet adsorbing holes to adsorb the metal plate 74 are indicated by Ha1, Ha2, Ha3, Ha4, Ha5 ..., and each arranged in a position (second grid position) of an intersection of diagonal lines connecting the substrate adsorbing holes arranged in the first grid position, as indicated by single circles in Fig. 13. Subsequently, a discharge valve is fixed with respect to each of those adsorbing holes. Although in Fig. 13 the hard-sheet adsorbing holes are indicated by the single circles and the substrate adsorbing holes are indicated by the double circles for the sake of clear distinctions between the substrate adsorbing holes and the hard-sheet adsorbing holes, in reality, both of those two kinds of adsorbing holes may be normal through holes. Further, although in Fig. 13, as an example, the substrate adsorbing holes arranged in the first grid position are connected by diagonal lines, and each of the hard-sheet adsorbing holes are arranged in the position of the intersection of the diagonal lines, this does not restrict the arrangements of the substrate adsorbing holes and the hard-sheet adsorbing holes. Moreover, it is possible to interchange the adsorbing holes and the hard-sheet adsorbing holes by interchanging the arrangements of the substrate adsorbing holes and the hard-sheet adsorbing holes in the hard sheet.

In the example shown in Fig. 14, substrate adsorbing discharge valves with respect to the substrate adsorbing holes HA1, HA2, HA3, HA4 and HA5 are respectively indicated by VA1, VA2, VA3, VA4 and VA5, and hard-sheet adsorbing discharge valves with respect to the hard-sheet adsorbing holes Ha1, Ha2, Ha3 and Ha4 are respectively indicated by Va1, Va2, Va3 and Va4. In the substrate 20 of the size shown in Fig. 14, the substrate adsorbing valves VA2, VA3 and VA4 of the substrate adsorbing holes according to the substrate 20 are set to open, while the other substrate adsorbing discharge valves VA1 and VA5 are set to close. The hard-sheet adsorbing discharge valves Va2, Va3 and Va4 of the hard-sheet adsorbing holes according to the metal plate 74 are set to open or close, while the discharge valves located on the outer side than those valves are set to open. With such a configuration, the discharge valve for each adsorbing hole can be open or closed even when the shape and size of the substrate 20 are changed, whereby it is possible to certainly adsorb the substrate 20. Further, since each of the adsorption regions is provided with the discharge valve, the open/close level of the discharge valve can be adjusted to change adsorption pressure in each of the adsorbing holes for changing the distribution of the adsorption pressure to the substrate 20 and the metal plate 74, so as to further maintain the flat level of the substrate 20. Moreover, since each of the adsorption regions is provided with the discharge valve, it is possible to cancel the adsorption of the broken substrate by closure of the discharge valve in the region to adsorb the substrate after completion of breaking, consequently, carrying the substrate after completion of breaking to the outside of the dividing device as needed is also possible.

### (Embodiment 5)

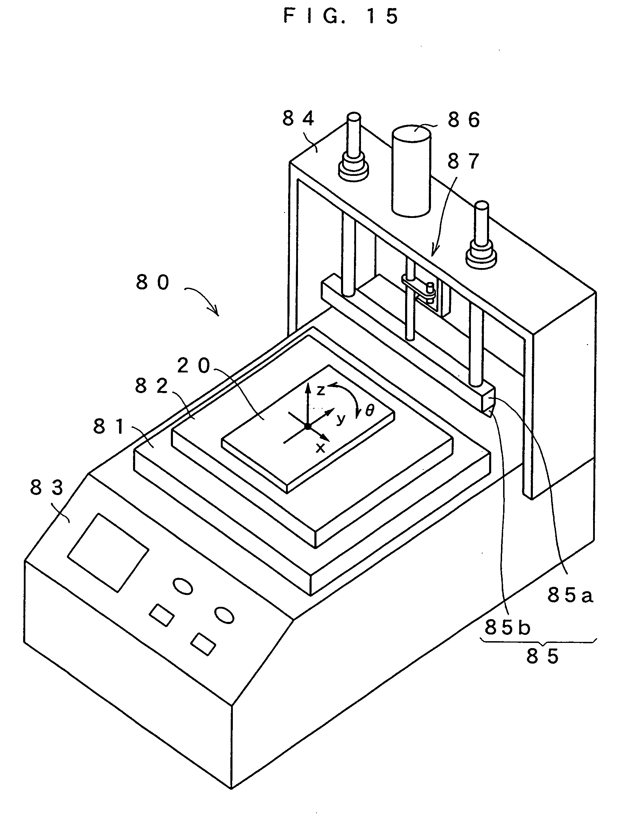

Next, a substrate processing device in Embodiment 5 of the present invention will be described. Fig. 15 is an external perspective view showing a main part of a breaking device for a substrate in Embodiment 5. As shown in the figure, any one of the processing tables described in Embodiments 1 to 4 is provided on a working table 81 of a breaking device 80. As already described, a processing table 82 shown in Fig. 15 includes a first sub-table, a second sub-table, a rubber plate, and a metal plate.

The substrate 20 to be broken is placed on the upper side of the processing table 82. The substrate 20 is fixed by means of the vacuum chuck function of the processing table 82, as described above. A discharge device which is not shown in the figure is arranged, and by an instruction from a control switch of an operational portion 83, a specific adsorbing hole, among a plurality of substrate adsorbing holes and hard-sheet adsorbing holes provided in the processing table 82, can be held at negative pressure. Thereby, the pressure of the predetermined adsorbing hole is made negative, and the substrate 20 is fixed onto the processing table 82 together with the metal plate. The processing table 82 is positioned by adjustment of the working table 81 in the x-direction, y-direction and θ-direction. An operation for such positioning can be instructed from the operational portion 83.

In the breaking device 80, as shown in Fig. 15, a breaking bridge 84 is provided so as to straddle the upper side of the working table 81 movably in the y-direction. Under the breaking bridge 84, a breaking bar 85 is held in parallel with the flat face of the working table 81, and is vertically driven by a cylinder 86. The breaking bar 85 is produced by joining a pressurization portion 85b to the under surface of a stick-like metal member 85a. The pressurization portion 85b is molded using a member, such as hard rubber or NC nylon, having a V-shaped cross section.

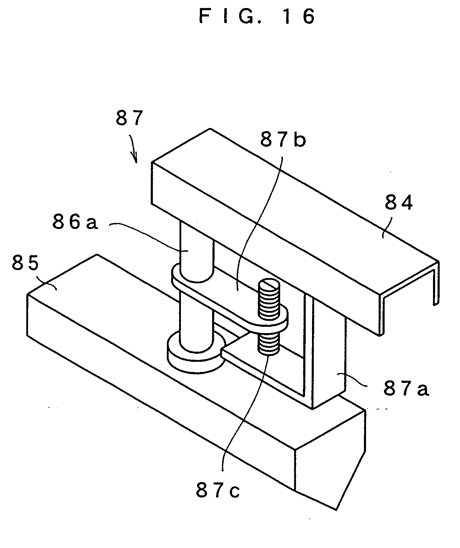

A stopper mechanism 87 is attached to the breaking bridge 84 in order to regulate the lowermost end position of the breaking bar 85. Fig. 16 is a partial enlarged view showing the structure of the main part of the stopper mechanism 87. An L-shaped stopper 87a is attached to the under surface of the top plate of the breaking bridge 84, and a latch strip 87b is horizontally attached to a cylinder axis 86a of the cylinder 86. Further, the distal end of the latch strip 87b is provided with a female screw, into which a screw bar 87c is screwed. By vertical adjustment of the position of the screw bar 87c, it is possible to set the lowermost end position of the breaking bar 85. Moreover, a lowering velocity of the breaking bar 85, a period of time in which the breaking bar 85 is kept stopped in the lower end position, air pressure to be supplied to the cylinder 86 for pressing the substrate 20, and the like, are adjustable from the operational portion 83.

Further, the working table 81 can be rotated by exactly 90° by a rotation mechanism which is not shown in the figure within the x-y flat face. The substrate 20 with orthogonal scribe lines formed thereon can be broken along each of the orthogonal scribe lines.

### (Embodiment 6)

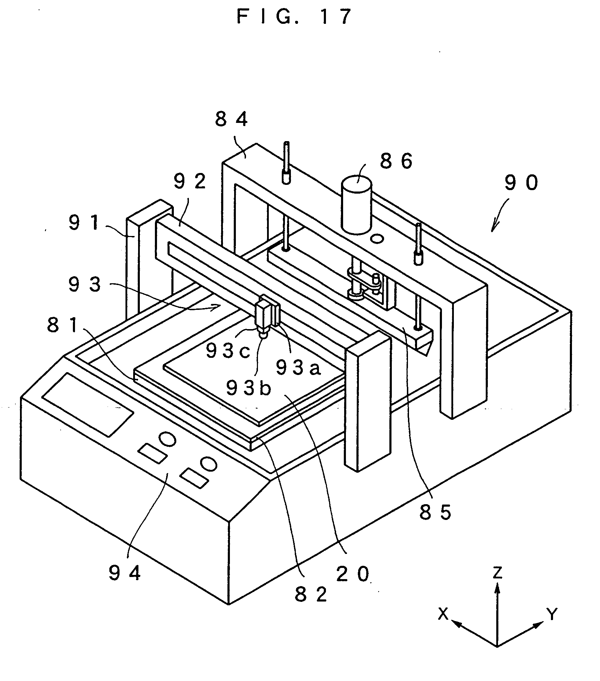

Next, a substrate processing device in Embodiment 6 of the present invention will be described. Fig. 17 is an external perspective view showing a configuration of a main part of a substrate processing device in this embodiment. This processing device 90 has a break function and a scribe function for a substrate. Further, a discharge device which is not shown in the figure is arranged, and by an instruction from a control switch of an operational portion 94, a specific adsorbing hole, among a plurality of substrate adsorbing holes and hard-sheet adsorbing holes provided in the processing table 82, can be kept at negative pressure.

In common with the processing device shown in Fig. 15, the processing device 90 has the breaking bridge 84, the breaking bar 85 and the cylinder 86 so that the break function is realized. Further, the processing device 90 has a scribing bridge 91, a guide bar 92 and a scribe head 93 so that the scribe function is realized. The guide bar 92 serves as a bar to slidably hold the scribe head 93 and guide it in the x-axis direction. The scribe head 93 forms a scribe line on the substrate 20 fixed onto the processing table 82. The scribe head 93 includes a holder backing 93a, a cutter wheel tip 93b and a tip holder 93c. The cutter wheel tip 93b is also called a cutter wheel, and is the same one as the cutter wheel 4 illustrated in Fig. 1(a). The cutter wheel tip 93b can be freely lifted/lowered in the z-axis direction by a lifting/lowering mechanism included in the scribe head 93.

The position of the working table 81 in the processing device is adjustable by the operational portion 94. When the scribe mechanism is set out in a processing position on the substrate 20 held in the working position described above, the breaking bridge 84 is retracted backward guided by a slide portion guide which is not shown in the figure. Further, when the break mechanism is set out in the processing position, the scribing bridge 91 is retracted forward to the near side.

For dividing the substrate 20 consisting of one layer, with the use of the processing device having the structure shown in Fig. 17, the following steps: that one side of the substrate 20 is scribed, that the obverse and reverse of the substrate 20 are inverted, and that the substrate 20 is fixed in the same position as the position of the substrate 20 at the time of scribing, and then broken are performed. In this case required is a substrate conveyance device, with which the already scribed substrate 20 is taken out of the processing device, followed by inversion and conveyance back the processing device, to be placed in a predetermined position. Further, in the case where the substrate is a laminated substrate, it is necessary to invert the laminated substrate in accordance with the order of the processing steps.

When using such a processing device, the installation range of the processing device as a whole is narrowed so that only one substrate conveyance device can deal with such processing steps. Further, a substrate positioning system can be commonly used in the scribe step and the break step, thereby exerting the effect of reducing cost related to the substrate positioning mechanism.

It should be noted that, although the cutter wheel and the cutter wheel tip are used as the scribe means for forming a scribe line on a substrate in each of the above embodiments, a scribe cutter using a rare stone such as diamond or sapphire, or the like, may also be used as the scribe means. Further, the following means can also be used as the scribe means. Heating a substrate by use of heating means such as a laser or a heater, or cooling the vicinity of a region on the substrate, which has been heated by the above-mentioned heating means, with a mixed fluid of water and compressed air or the like, to cause heat distortion of the substrate, thereby forming a scribe line (vertical crack line). As break means for breaking a substrate where a scribe line has been formed, the above description has been mainly given by taking the means of pressing the breaking bar onto a substrate as an example. However, it may also be applied that the surface of a substrate is heated by rolling/sliding a plurality of rollers along a scribe line on the main face of the substrate, or by applying a laser to the substrate, or by spraying heat fluid from a nozzle. Thereafter, using stress for swelling of the substrate surface, a vertical crack along the scribe line is extended in the thickness direction of the substrate to break the substrate.

As thus described, according to the present invention, since the whole of a substrate can be adsorbed to a processing table without distortion of the substrate, a broken section almost perpendicular to the substrate surface can be obtained without oblique breaking from the substrate surface at the time of breaking. Further, in the case of dividing a laminated glass substrate, break failure such as the co-broken phenomenon, which has tended to occur at the time of breaking, can be prevented.

Moreover, even when the shape and size of the substrate are changed, those changes can be readily dealt with so as to adsorb the substrate while maintaining the flat level of the substrate surface. Since the adsorption to the broken substrate can be cancelled, the substrate after completion of breaking can be carried to the outside of a dividing device as needed.

### Industrial Applicability

A substrate processing table according to the present invention can be preferably used for a processing device to scribe and break a brittle substrate. Such a processing device can be applied to processing of substrates such as a semiconductor wafer, a glass substrate, a quartz substrate and a ceramic substrate, and can be used for devices for producing flat panel displays (FPD) including a liquid crystal display (LCD) and a plasma display panel (PDP).

## Claims

1. A substrate processing table comprising:
a first sub-table;
a second sub-table which is placed on a top surface of said first sub-table;
an elastic sheet which has a predetermined thickness and is provided on a top surface of said second sub-table; and
a hard sheet which is provided on a top surface of said elastic sheet and on which a substrate to be processed is placed, the substrate processing table further comprising:
a plurality of substrate adsorbing holes which penetrate through said second sub-table, said elastic sheet and said hard sheet, to suck said substrate;
a plurality of hard-sheet adsorbing holes which penetrate through said second sub-table and said elastic sheet, to suck said hard sheet; and
a communication portion for communicating the respective lower ends of said substrate adsorbing holes and said hard-sheet adsorbing holes to a vacuum source.

2. The substrate processing table according to claim 1, wherein said communication portion is formed on either the first sub-table or the second sub-table, and includes a cavity portion which communicates each of the lower ends of said plurality of substrate sucking holes and said plurality of hard-sheet sucking holes with said vacuum source.

3. The substrate processing table according to claim 1, wherein formation ranges of said substrate adsorbing holes and said hard-sheet adsorbing holes are changed according to the shape of said substrate.

4. The substrate processing table according to claim 1, wherein the respective upper ends of said substrate adsorbing holes and said hard-sheet adsorbing holes are arranged in line in at least one concentric position.

5. The substrate processing table according to claim 1, wherein the respective upper ends of said substrate adsorbing holes and said hard-sheet adsorbing holes are alternately arranged in at least one concentric position.

6. The substrate processing table according to claim 2, wherein
said cavity portion includes a substrate sucking cavity portion which communicates a substrate adsorbing hole group arranged in a concentric position to said cavity source, and a hard-sheet sucking cavity portion which communicates said hard-sheet adsorbing hole group arranged in a concentric position to said vacuum source.

7. The substrate processing table according to claim 6, wherein said substrate sucking cavity portion and said hard-sheet sucking cavity portion are grooves formed on either the first sub-table or the second sub-table.

8. The substrate processing table according to claim 1, wherein said substrate adsorbing holes and said hard-sheet adsorbing holes are collectively formed so as to be parted with a plurality of regions, and said regions are formed in a pattern having regularity.

9. The substrate processing table according to claim 8, wherein the pattern formed in said regions is a checkered pattern.

10. The substrate processing table according to claim 1, wherein a switching valve is provided on each communication portion extending from said substrate adsorbing hole and said hard-sheet adsorbing hole to said vacuum source.

11. The substrate processing table according to claim 1, wherein said substrate sucking holes and said hard-sheet sucking holes are arranged in a pattern having regularity.

12. The substrate processing table according to claim 1, wherein said substrate sucking holes and said hard-sheet sucking holes are formed in grid form, and each of the sucking holes is arranged on a line connecting points of the grid.

13. A substrate processing device comprising:
the substrate processing table according to claim 1;
a discharge device which keeps at negative pressure a specific adsorbing hole among a plurality of substrate adsorbing holes and hard-sheet adsorbing holes provided in said processing table; and
break means which is held in a vertically movable manner with respect to said substrate processing table to break a substrate on which a subscribe line is formed.

14. A substrate processing device comprising:
the substrate processing table according to claim 1;
a discharge device which keeps at negative pressure a specific adsorbing hole among a plurality of substrate adsorbing holes and hard-sheet adsorbing holes provided in said substrate processing table;
scribe means which forms a scribe line on a substrate held on said substrate processing table; and
break means which breaks said substrate along said scribe line.
